# EUROPEAN PATENT APPLICATION

(11) **EP 2 770 423 A2**
(43) Date of publication of application: **27.08.2014**
(21) Application number: 14156025.0
(22) Date of filing: 20.02.2014
(51) Int. Cl.: G06F 3/0488, G06F 3/0484

(54) **Method and apparatus for operating object in user device**

(30) Priority: 23.02.2013 KR 20130019530
(71) Applicant: Samsung Electronics Co., Ltd., Suwon-si Gyeonggi-do 443-742 (KR)
(72) Inventor: Jeon, Jinyoung, 443-742 Gyeonggi-do (KR); Kang, Jiyoung, 443-742 Gyeonggi-do (KR); Kim, Daesung, 443-742 Gyeonggi-do (KR); Kim, Jinyong, 443-742 Gyeonggi-do (KR); Lee, Boyoung, 443-742 Gyeonggi-do (KR); Lim, Seungkyung, 443-742 Gyeonggi-do (KR)
(74) Representative: Jenkins, Richard Gavin

(57) **Abstract**

A method and an apparatus for operating an object in a user device having a touch screen are provided. The method includes displaying one or more objects on a screen, detecting a hovering input selecting the object, displaying the selected object distinguished from other object in response to the hovering input, detecting a touch contact input related to the object selected by the hovering input, and operating the object selected by the hovering input when the touch contact input satisfies a condition.

## Description

### TECHNICAL FIELD

The present disclosure relates to a method and an apparatus for operating an object in a user device having a touch screen. More particularly, the present disclosure relates to a method of processing an object in a user device based on a hovering and a touch.

### BACKGROUND

In recent years, with the development of communication technology, a user device such as a smart phone and a tablet Personal Computer (PC) has been widely used. The user device has been used for a broad area due to its convenient usage and ease of portability. Particularly, a device equipped with a touch screen has been continuously developed. The touch screen is an input and display apparatus that may be used to input and display information on the same screen. An apparatus equipped with a touch screen provides various contents and functions through a display unit, and supports intuitive use of the functions. The user may operate a device or input information necessary for the device by using various input means such as a touch, a voice, and a motion.

Although information is provided through the user device, the size of a displayed object such as text, an image, a menu, a list, and an icon displayed on the screen must be gradually reduced due to the limited size of the screen. Thus, it is difficult for the user to select an object displayed on the touch screen. Further, a malfunction may be generated when the user operates a specific object such that an adjacent object other than a desired object of the user is executed. Therefore, a need exists for an improved apparatus and method for operating an object in a user device capable of improving accuracy of a user input in order to operate an object displayed on the screen.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of operating an object in a user device capable of improving accuracy of a user input in order to operate an object displayed on the screen, and an apparatus thereof.

Another aspect of the present disclosure is to provide a method of operating an object in a user device capable of providing visual feedback to an object selected according to a user input, and correcting the user input so that the user may exactly select a desired object.

In accordance with an aspect of the present disclosure, a method of operating an object in a user device is provided. The method includes displaying one or more objects on a screen, detecting hovering approaching one of the one or more objects displayed on the screen, graphic-processing and displaying a selected object distinguished from other objects in response to the hovering, detecting a touch for selecting the other objects except for the graphic-processed object, and operating the graphic-processed object in response to the touch when the touch satisfies a condition.

In accordance with another aspect of the present disclosure, a user device is provided. The user device includes a touch screen configured to detect a user input related to hovering and touch, and to display an execution screen according to the user input, and a controller configured to display one or more objects on the touch screen, to detect hovering approaching one of the one or more objects, to graphic-process and display an object, selected in response to the hovering, distinguished from other objects, to detect a touch selecting another object except for the graphic-processed object, and to control to operate the graphic-processed object in response to the touch when the touch satisfies a condition.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a user device according to an embodiment of the present disclosure;
FIG. 2 is a flowchart illustrating a method of operating an object in a user device according to an embodiment of the present disclosure;
FIGS. 3A, 3B, 3C, 3D, 3E, and 3F are diagrams illustrating an operation state of a user and a method of operating an object according to an embodiment of the present disclosure;
FIG. 4 is a diagram illustrating a screen of operating an object according to a user input according to an embodiment of the present disclosure;
FIG. 5 is a diagram illustrating a screen of operating an object according to an input state of a user according to an embodiment of the present disclosure;
FIG. 6 is a flowchart illustrating a method of operating an object in a user device according to an embodiment of the present disclosure;
FIG. 7 is a diagram illustrating an object operating function according to an embodiment of the present disclosure; and
FIG. 8 is a diagram illustrating a screen of operating an object according to an input state of a user according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, a user input is divided into "hovering input", "hovering operation input", and "touch contact input" according to a spacing distance, for example, a depth between a touch screen and a touch input means (e.g., touch pen or user finger).

In the present disclosure, "hovering input" signifies a state in which a user device recognizes a touch input means to detect a location of the touch input means. When the user input is the hovering input, for example, when a vertical distance between the touch screen and the touch input means is within a first spacing distance Ncm, the user device may detect a location of the touch input means. If the hovering is detected, the user device selects an object corresponding to a location of the touch input means, and displays the selected object to be distinguished from other objects. In this case, the user device may distinguish the selected object from other objects using at least one of color, light and shade, brightness, chroma, and an effect of the selected object.

In the present disclosure, the term "hovering operation input" signifies an input of the touch input means that is detected within a second spacing distance Tcm from a touch screen in a hovering input range. Here, the second spacing distance Tcm may be a conditional value to correct an erroneous operation of an object determined by hovering.

When the touch input means approaches within the second spacing distance, the user device supports a function to operate the object selected by hovering.

In the present disclosure, "touch contact" signifies a state in which the touch screen is contacted with the touch input means. If the touch screen is contacted with the touch input means in a state in which a specific condition is not satisfied, the user device supports the function of operating an object corresponding to the touch contacted location. In the present disclosure, the user device may differently display the object selected by a touch contact from the object selected by a hovering.

The method and the apparatus according to the present disclosure may be applied to a portable terminal. It is obvious that the portable terminal may be a mobile phone, a smart phone, a tablet Personal Computer (PC), a hand-held PC, a Portable Multimedia Player (PMP), and a Personal Digital Assistant (PDA), and the like.

Hereinafter, it is assumed that the user device according to the present disclosure is applicable to a portable terminal.

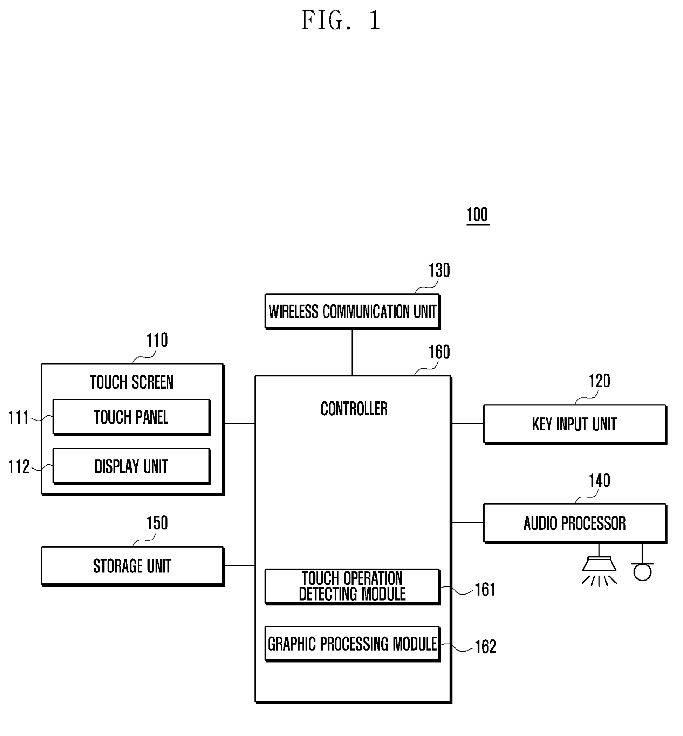

FIG. 1 is a block diagram illustrating a user device according to an embodiment of the present disclosure.

Referring to FIG. 1, the user device 100 may include a touch screen 110, a key input unit 120, a wireless communication unit 130, an audio processor 140, a storage unit 150, and a controller 160.

The touch screen 110 displays a screen according to execution of a user function, and detects an input event related with control of the user function. The touch screen 110 may include a touch panel 111 and a display unit 112. Further, the touch screen 110 may include a pen recognition panel to operate a pen function of a touch panel. In this case, the user device may be configured to include a touch pen.

The touch panel 111 is placed on the display unit 112. For example, the touch panel 111 may be classified into an add-on type touch panel which is located on a front surface of the display unit 112 and an on-cell type touch panel or an in-cell type touch panel which is inserted in the display unit 112. The size of the touch screen may be determined depending on the size of the touch panel. A resistive type, a capacitive type, an electromagnetic induction type, and the like are applicable as the touch screen 110.

When the touch panel 111 is configured with a capacitance scheme, the present disclosure supports the generation of an input event by a touch input means such as a finger capable of causing a variation of capacitance. For example, the touch panel 111 may detect capacitance variation according to a spacing distance between the touch input means and the touch screen. The touch panel 111 may classify a hovering input, a hovering operation input, and a touch contact input according to the capacitance variation. The touch panel 111 may transfer a value of location having varied capacitance to the controller 160 so that the location of a touch input means may be detected. Further, when the present disclosure includes a pen recognition panel configured with an electromagnetic induction scheme, the pen recognition panel may support the generation of an input event by a touch input means such as a touch pen capable of varying electromagnetic induction. The pen recognition panel supports electromagnetic induction according to a coil provided at a touch pen, and transfers a value of location where the electromagnetic induction is performed to the controller 160 so that the location of a touch pen is detected. In this case, the pen recognition panel may classify a hovering input, a hovering operation input, and a touch contact input according to an electromagnetic induction value having a difference depending on a distance between the screen and the touch pen.

The display unit 112 converts image data input from the controller 160 into an analog signal to display under control of the controller 160. The display unit 112 may provide screens according to an operation of a user device and an operation of a user function, for example, a lock screen, a home screen, an application (hereinafter referred to as 'App') execution screen, a menu screen, a keypad screen, a message writing screen, an Internet screen, and the like.

In the present disclosure, the display unit 112 supports a function of differently displaying an object on the screen according to the user input. That is, when the user input satisfies a condition, the display unit 112 may provide a graphic effect relevant to a corresponding condition to the object displayed on the screen. For example, the display unit 112 may change and display at least one of a color, light and shade, brightness, chroma, and an effect of the object under control of the controller 160.

The key input unit 120 may include a plurality of input keys and function keys for receiving number or character information, and setting various functions. The function keys may include an arrow key, a side key, and a hot key set to perform a specific function. The key input unit 120 may generate a key signal related with user setting and function control of the user device and transmit the key signal to the controller 160. The key signal may be divided into a power on/off signal, a volume control signal, and a screen on/off signal. The controller 160 may control the above configurations in response to the key signal. Moreover, the key input unit 120 may include a Qwerty key pad, a 3*4 key pad, a 4*3 key pad, and the like including a plurality of keys. When a touch panel 111 of the user device 100 is supported in the form of a touch screen, the key input unit 120 may include only at least one key (e.g., soft key, hard key) for screen on/off and user device on/off which is provided at a side of a case of the user device.

The wireless communication unit 130 performs communication of the user device 100. For example, the wireless communication unit 130 forms a communication channel with a supportable mobile communication network to perform communication such as voice communication, image communication, and data communication. The wireless communication unit 130 may include a Radio Frequency (RF) transmitter for up-converting and amplifying a frequency of a transmitted signal, and an RF receiver for low-noise-amplifying and down-converting a frequency of a received signal. Further, the wireless communication unit 130 may include a mobile communication module (e.g., third Generation (3G) mobile communication module, 3.5-Generation (3.5G) mobile communication module, fourth Generation (4G) mobile communication module, and the like), a Digital Multimedia Broadcasting (DMB) module, and the like.

The audio processor 140 converts audio data such as a voice input from the controller 160 into analog data by Digital to Analog (DA) converting, and transmits the analog audio data to the speaker. The audio processor 140 converts audio data such as a voice input from the microphone into digital data by Analog to Digital (AD) converting, and transfers the digital data to the controller 160. The audio processor 140 may be configured with a COder/DECoder (CODEC), and may include a data CODEC for processing packet data and an audio CODEC for processing an audio signal such as a voice. The audio processor 140 converts a received digital audio signal into an analog audio signal through the audio CODEC and plays the analog audio signal through the speaker. The audio processor 140 converts an analog audio signal input from a microphone into a digital audio signal through the audio CODEC, and transfers the digital audio signal to the controller 160.

The storage unit 150 stores various data generated in a portable user device as well as an Operating System (OS) of the user device 100 and various applications. The data may include data generated in execution of an application of the user device and various types of storable data generated by using the portable terminal or received from an external source (e.g., an external server, another portable terminal, a PC, and the like). The storage unit 150 may store a user interface provided from the user device and various setting information related to the processing of functions in the user device. The storage unit 150 may store conditional information capable of determining a hovering input, a hovering operation input, and a touch contact, various conditional information related to a graphic processing function and a magnifying information display function for a screen, a rule, and the like.

The controller 160 controls an overall operation of the user device and signal flow between internal configurations of the user device, and processes data. The controller 160 controls a power supply from a battery to internal configurations. If power is supplied, the controller 160 controls a booting procedure of the user device, and executes various application programs stored in a program area in order to execute a function of the user device.

The controller 160 may include a touch operation detecting module 161 and a graphic processing module 162. The touch operation detecting module 161 receives an input event from the touch screen 110 to classify a user input according to the input event. The touch operation detecting module 161 detects the touch input means to determine a distance between the touch input means and the touch screen 110. When the distance between the touch input means and the touch screen 110 is within a first spacing distance, the touch operation detecting module 161 may detect a hovering input. When the touch input means is contacted with the touch screen 110, the touch operation detecting module 161 may detect a touch contact input.

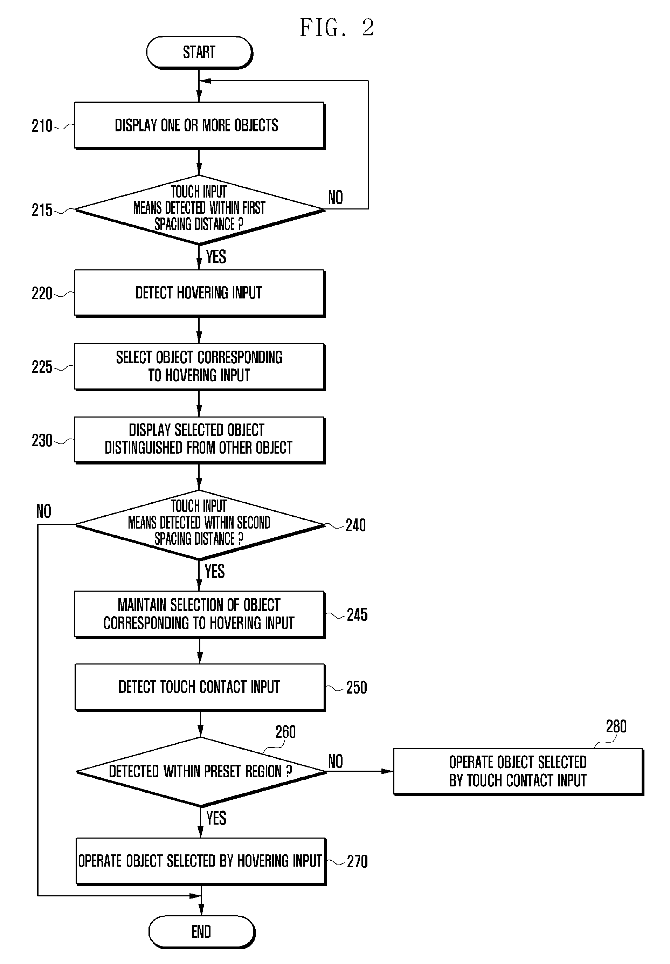

If the user input is detected, the graphic processing module 162 executes a function corresponding to a user input or a function according to a rule to output a corresponding execution screen. The graphic processing module 161 changes and displays at least one of a color, light and shade, brightness, chroma, and an effect of the object selected according to hovering. The graphic processing module 162 differently displays the object selected according to the hovering and the object selected by the touch contact input. An operation of the controller 160 will be described in more detail with reference to FIG. 2.

Since the structural elements can be variously changed according to the trend of digital convergence, not all elements can be listed herein. That is, the user device 100 of the present disclosure may further include elements which are not mentioned above such as a sensor module to detect information related to location variation of the user device, a Global Positioning System (GPS) module to measure a location of the user device 100, a camera module, and the like. Further, in the user device 100 of the present disclosure, specific elements may be omitted from the foregoing configurations or substituted by other elements according to the provided form. In addition, the input unit of the present disclosure may be a touch pad and a track ball as well as the touch screen 110 and the key input unit 120.

FIG. 2 is a flowchart illustrating a method of handing an object in a user device according to an embodiment of the present disclosure.

Referring to FIG. 2, the controller 160 displays one or more objects on a screen of a display unit 112 according to a user input or a schedule at operation 210. The object may include constituent elements to configure a screen of the display unit 112, for example, an icon, a thumbnail, a list item, a menu item, a text item, a link item, and the like.

The controller 160 determines whether the touch input means approaches within the first spacing distance Ncm at operation 215. The touch input means may be a finger of the user or a touch pen.

In more detail, when the touch input means approaches the touch screen 110, the controller 160 measures a variation in capacitance or a variation in an electromagnetic induction value. The controller 160 determines the distance between the touch input means and the touch screen 110 based on the measured variation amount. The controller 160 may determine the input of the user based on the determined distance.

When the touch input means approaches within the first spacing distance, the controller 160 detects hovering input at operation 220. If the hovering input is detected, the controller 160 may determine a location of the touch input means.

The controller 160 selects an object corresponding to a hovering input location at operation 225. The controller 160 displays the selected object distinguished from other objects at operation 230. The controller 160 may display at least one of a color, light and shade, brightness, and an effect with respect to the object selected by the hovering input. For example, the controller 160 may highlight and display the object determined as selected by the hovering input. The controller 160 may display the object selected by the hovering input distinguished from other objects. In addition, the controller 160 may additionally display an icon such as a pointer.

The controller 160 determines whether the touch input means approaches within a second spacing distance at operation 240. When the touch input means approaches within the second spacing distance, the controller 160 maintains the changed effect of the object at operation 245.

When the touch input means approaches within the second spacing distance, the controller 160 recognizes that the user input is the hovering operation input and maintains a hovering input signal. In case of the hovering operation input, that is, if the touch input means approaches within the second spacing distance, the user device supports a function of disregarding the hovering input detected from another region.

The controller 160 detects a touch contact input for the touch input means at operation 250. The controller 160 determines whether the detected touch contact input is detected within a region based on the hovering detected location at operation 260. When the touch contact input is detected within the region, the controller 160 operates the object selected by the hovering input at operation 270. That is, the controller 160 may execute a function corresponding to the object selected by the hovering input.

When the touch contact input is detected outside the region, the controller 160 operates an object corresponding to a detected location of the touch contact input at operation 280. That is, the controller 160 may execute a function corresponding to the object selected by the touch contact input. The controller 160 may display the object selected by the touch contact input differently from the object selected by the hovering input. That is, if a condition is satisfied at the time of detecting the touch contact input, the controller 160 maintains the object selected by the hovering input. When the condition is not satisfied, the controller 160 may select another object selected by the touch contact input.

Meanwhile, although not shown, the user device of the present disclosure may further include a procedure in which the hovering input location is changed or the touch input means is beyond the first spacing distance when the touch input means does not approach within the second spacing distance after the hovering input is detected. When the location of the hovering input is changed, the user device may perform a process in which the object selected by the changed location is displayed distinguished from other object. When the touch input means is beyond the first spacing distance, the controller may release the effect of differently displaying the object.

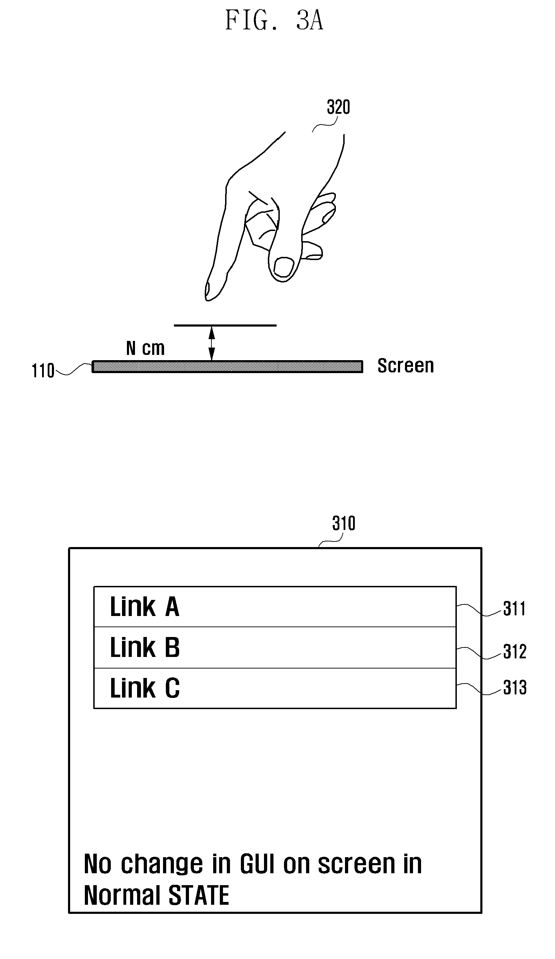

FIGS. 3A to 3F are diagrams illustrating an operation state of a user and a method of operating an object according to an embodiment of the present disclosure.

The user device according to the present disclosure supports a function which classifies the input of a user and differently displays a user interface screen according to the user input. The user device may classify the input of the user according to the distance between the touch screen and the touch input means. Further, when a determined condition is satisfied in a state in which the hovering input is detected, the user device processes the object selected by the hovering input. When the determined condition is not satisfied, the user device supports a function which processes the object selected by the touch contact input.

FIG. 3A is a diagram illustrating a case in which an operation of the user operating the user device is defined as a normal state. Referring to FIG. 3A, the touch screen 110 may output one or more objects on a screen according to a request of the user or according to a schedule. For example, the display unit may output a screen 310 including a first object (Link A) 311, a second object (Link B) 312, and a third object (Link C) 313.

The touch input means 320 (e.g., finger) may approach the touch screen 110 so as to select and operate one of the objects displayed on the screen. In this case, the first spacing distance N between the touch screen 110 and the touch input means 320 may be set in the user device so as to classify the input of the user. The first spacing distance may be a vertical distance (i.e., a depth) with respect to the touch input means and the touch screen. The first spacing distance may be a threshold value indicating a minimum level by which the user device may detect a location of the touch input means 320.

As illustrated in FIG. 3A, when the touch input means 320 is beyond the first spacing distance (i.e., at a height greater than N cm), the user device may detect that the touch input means is approached, but supports not to change graphic information of the screen 310 output on the display unit.

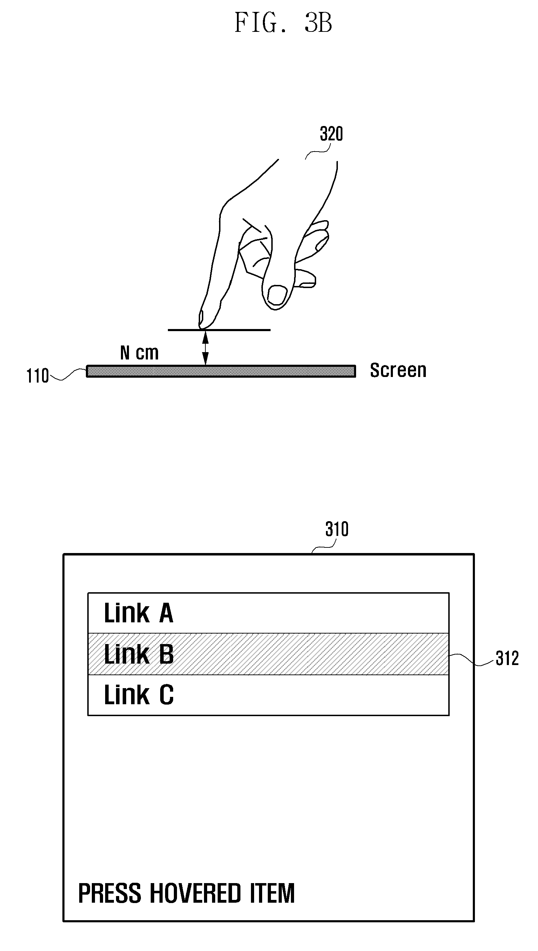

FIG. 3B is a diagram illustrating a case in which an input operation of the user operating the user device is defined as a hovering input. The touch input means 320 may approach the touch screen 110 within the first spacing distance in order to select the second object 312. If it is determined that the touch input means 320 is approached within the first spacing distance N, the user device detects the hovering input. In this case, the user device may detect the location of the touch input means of the user device. As illustrated in screen 310 of FIG. 3B, the user device may display the second object 312 selected by the hovering input as distinguished from other objects. For example, the user device may highlight the second object 312 to be distinguished from other objects. The user may intuitively confirm the object selected by the hovering input through the highlighted object.

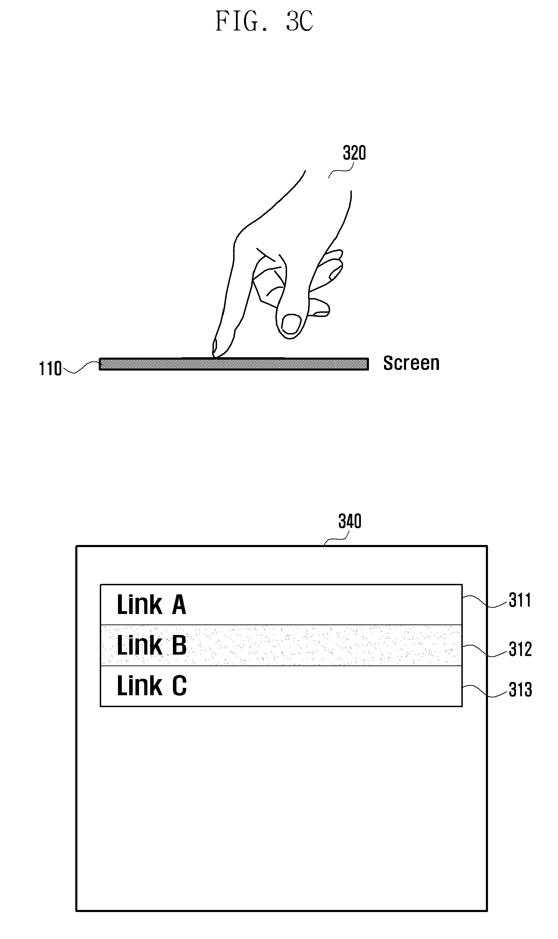

FIG. 3C is a diagram illustrating a case in which the input of the user operating the user device is classified as a touch contact input. The user may contact the touch screen 110 with the touch input means 320 to operate the second object 312. When the touch input means 320 is contacted with the touch screen 110, the user device detects the touch contact input, and confirms the location of the touch input means. The user device determines that the second object 312 is selected by the touch contact input, and as illustrated in a screen of FIG. 3C, the user device may change and display a color distinguished from the case of being selected by the hovering input and distinguished from the first object 311 and the third object 313.

Meanwhile, the location information of the touch input means may be changed according to the hovering input and the touch contact input. As illustrated in FIG. 3C, the user device displays the object selected by the hovering input to be distinguished from the object graphic-processed selected by the touch contact input. The user may classify and recognize the object 312 selected by the hovering input as illustrated in a screen 310 of FIG. 3B and the object 312 selected by the touch contact input as illustrated in a screen 340 of FIG. 3C.

In this case, the user may touch contact another object close to the highlighted object. When the selection of the object for the hovering input and the touch contact input is different, if a condition is satisfied, the user device operates the object selected by the hovering input. If the condition is not satisfied, the user device operates the object selected by the touch contact input.

For example, on screen 340 of FIG. 3C, the user may generate a touch contact input in the location corresponding to the third object 313. The user device may determine that it is within the hovering operation input range in a state in which the second object 312 is selected by the hovering input, and a touch contact input is occurred within a certain region R based on the hovering input location. In this case, the user device may disregard the third object 313 selected by the touch contact input and may maintain the selection of the second object 312 selected by the hovering input.

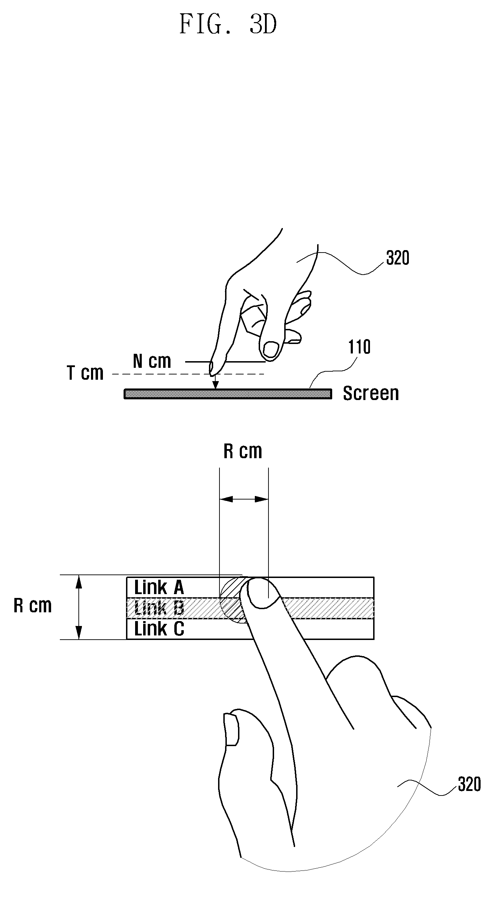

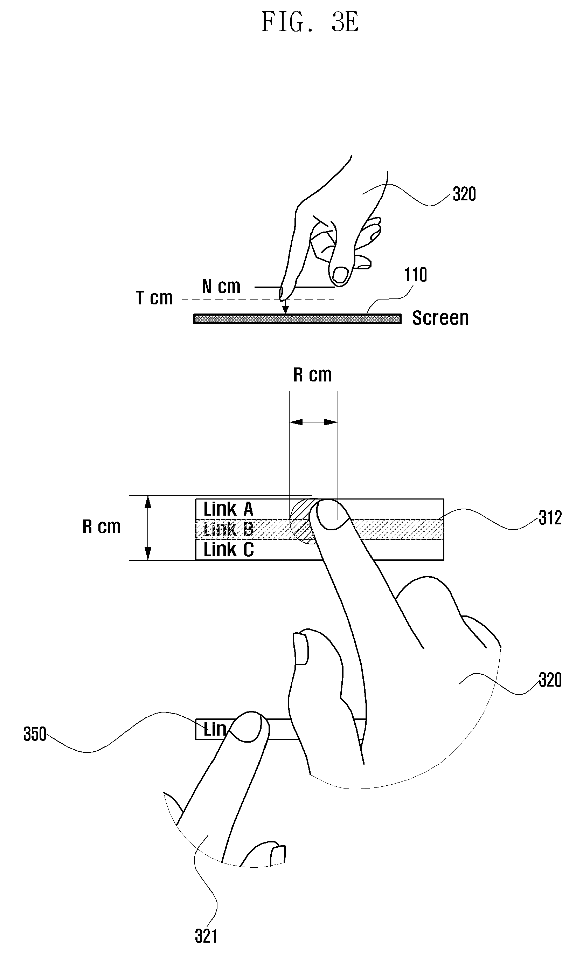

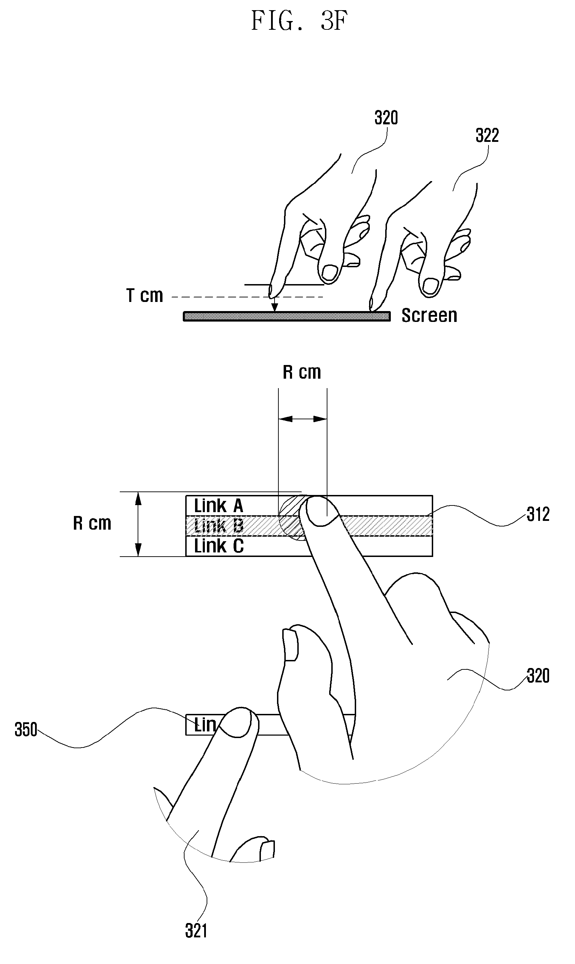

FIGS. 3D, 3E, and 3F are diagrams illustrating that an input operation of the user operating the user device is classified as a hovering operation input. In the present disclosure, the distance between the touch screen 110 and the touch input means may be set as the first spacing distance N and the second spacing distance T in the user device. The second spacing distance T may be a spacing distance (i.e., a depth) between the touch input means and the touch screen. The second spacing distance T may be a distance recognizing hovering input, that is, a specific value set within the first spacing distance range. The second spacing distance T may be set to maintain a hovering input. In the state in which the object is differently displayed by the hovering input, the user device according to the present disclosure supports a function disregarding a hovering input detected at another region.

For example, if the user device detects the hovering input, as shown in FIG. 3D, the user device displays the object selected by the hovering input to be distinguished from another object. In this state, when the touch input means 320 approaches within the second spacing distance Tcm, the user device determines the user input as the hovering operation input, and maintains display of the object selected by the hovering input.

Meanwhile, as shown in FIG. 3E, the user device may detect a second hovering input 321 in a region 350 other than the first hovering in a state in which the second object 312 is selected by the first hovering input. In this case, the user device may disregard the second hovering input 321, when the touch input means is maintained within the second spacing distance T in a state in which the second object 312 is selected by the first hovering input. That is, in the case in which the approach of the touch input means 320 corresponds to the hovering operation input, the user device maintains the object corresponding to the first hovering input although the second hovering is detected. Further, as shown in FIG. 3F, the user device may detect the touch contact input of the touch input means 322 in a region other than the first hovering input region in a state in which the first hovering input is detected. Since the touch contact input does not satisfy the condition related to the first hovering input, the user device selects and operates the object corresponding to the touch contact input.

Based on FIG. 3E and FIG. 3F, when the touch contact input is detected in a region R based on the hovering location, the user device may process the object selected by the hovering input.

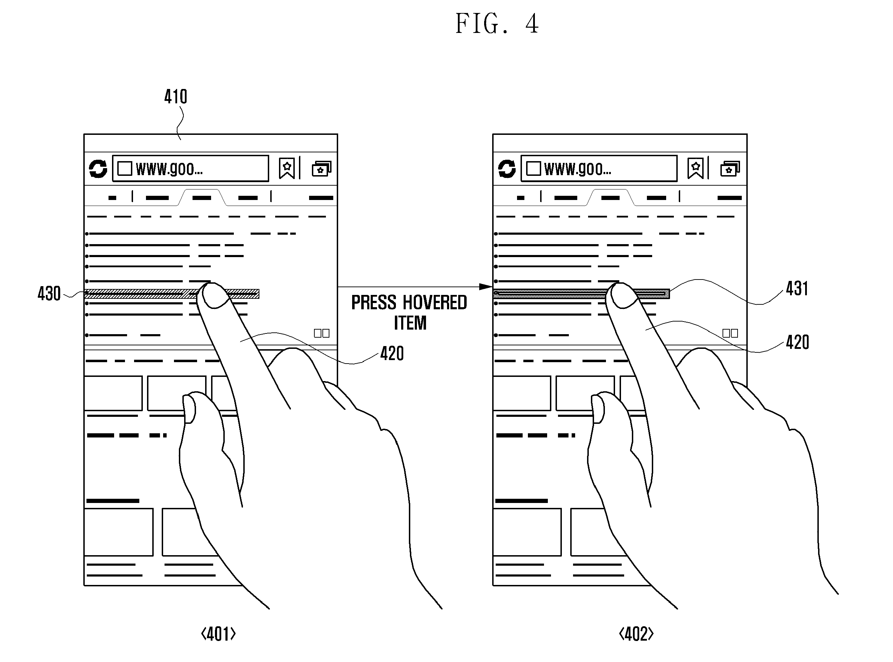

FIG. 4 is a diagram illustrating a screen of handing an object according to a user input according to an embodiment of the present disclosure.

Referring to FIG. 4, the user may access a specific web site by using a communication function of the user device. The user device outputs a web browser screen 410 received from a corresponding web server apparatus on the display unit as illustrated in a screen 401. The web browser screen 410 may include a plurality of objects, for example, a linked text, image contents, a menu item, and the like.

In this state, the user's finger 420 may approach the screen in order to select a linked text on the web browser screen 410. The user device determines a spacing distance between the finger 420 and the screen based on capacitance according to the approach of the finger 420. When the determined spacing distance is determined to be the first spacing distance or shorter, the user device detects a hovering input of the user. The user device highlights an object 430 corresponding to a location of the finger 420 in response to the hovering input, as illustrated in the screen 401.

In such a state, the user may touch and contact the highlighted object 430. In the meantime, the user may touch and contact another object close to the object selected by the hovering input.

If the touch contact input of the user is detected within a region based on the location in which the hovering input is detected, the user device maintains selection of the object selected by the hovering input in response to the touch contact input and distinguishes the selected object 431, as illustrated in the screen 402. For example, the user device may distinguish the selected object 431 by means of changing its color.

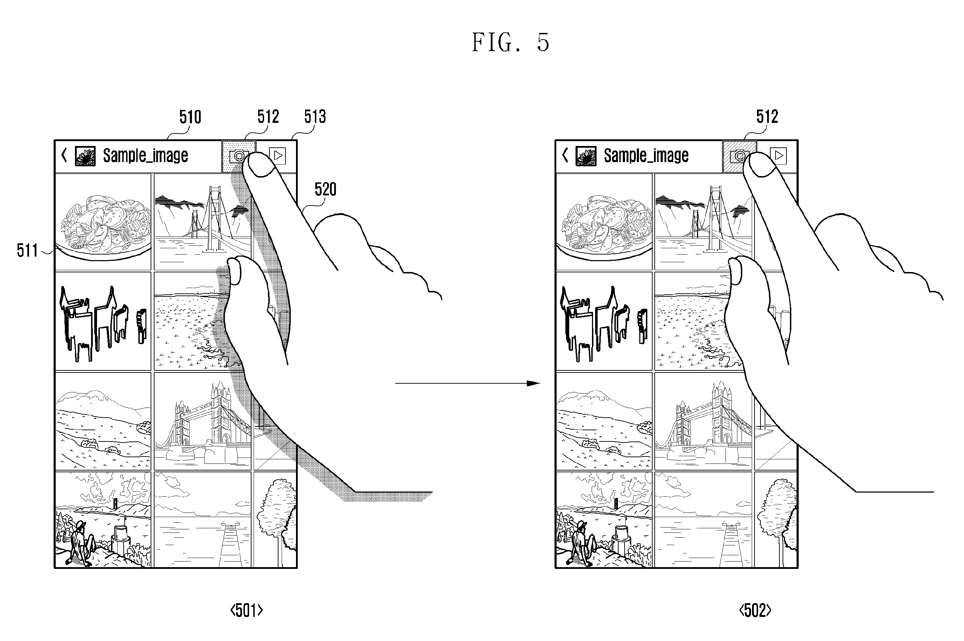

FIG. 5 is a diagram illustrating a screen of operating an object according to an input state of a user according to another embodiment of the present disclosure.

Referring to FIG. 5, the user may execute a gallery function provided from the user device. The user device may output a gallery execution screen 510 on a display unit in response to a request from the user, as illustrated in screen 501. The gallery execution screen 510 may include a plurality of thumbnail images 511 and menu items. The thumbnail images and the menu items may correspond to an object displayed on the screen. As illustrated in the screen 501, a menu item, for example, a camera function icon 512, a moving image function icon 513, and the like are output with a relatively small size compared with the thumbnail image.

The user device detects a hovering input that approaches a screen aiming at the camera function icon 512, and highlights the camera function icon 512 in response to the hovering input as illustrated in the screen 501.

In such state, the user may touch a screen with a finger 520 aiming at the highlighted camera function icon 512. In this case, the user may not touch and contact the camera function icon 512 but instead may touch and contact the adjacent moving image function icon 513 due to a limitation of the size of the screen. The user device of the related art operates a touched and contacted icon, that is, the moving image function icon 513 such that the moving image function is executed.

However, according to the present disclosure, even though the moving image function icon 513 is touched, when a condition is satisfied, as shown in screen 502, the user device may maintain the determination of an object selected according to the hovering input in response to the touch. In addition, the user device may change and display the highlighted color in order to differently provide a visual effect for the hovering input and touch contact input.

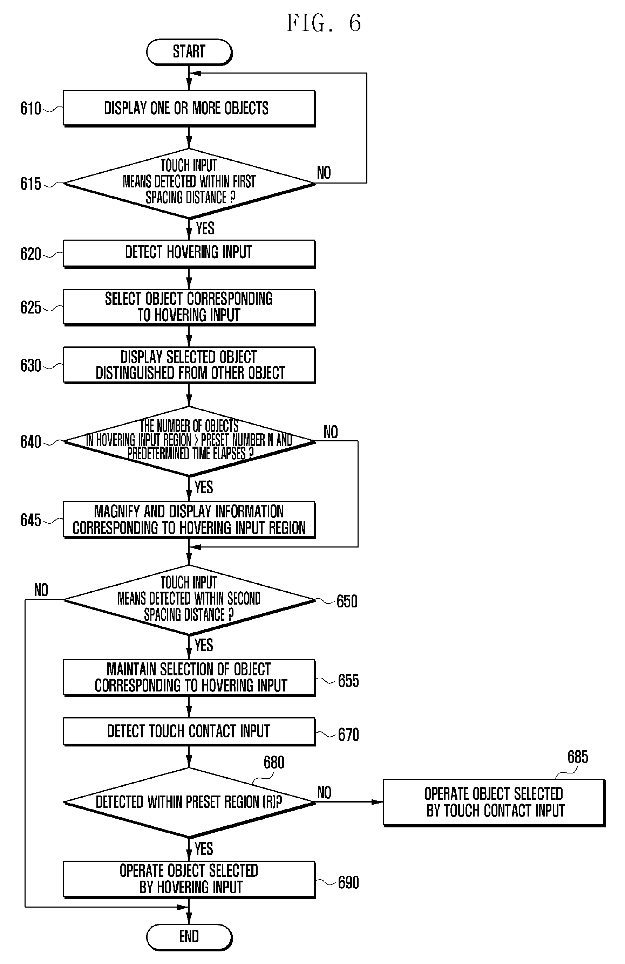

FIG. 6 is a flowchart illustrating a method of operating an object in a user device according to an embodiment of the present disclosure.

Referring to FIG. 6, the controller 160 displays one or more objects on a screen of the display unit 112 according to a user input or a schedule at operation 610. The controller 160 determines whether a touch input means approaches within a first spacing distance at operation 615. When the touch input means approaches within the first spacing distance, the controller 160 detects a hovering input at operation 620. The controller 160 selects the object corresponding to the detected location of the hovering input at operation 625. The controller 160 displays the selected object to be distinguished from other objects at operation 630. Here, since operations 610 to 630 are substantially identical with operations 210 to 240, a description thereof is omitted.

The controller 160 determines whether the number of objects included in a hovering input region exceeds a number n and a preset time is elapsed at operation 640. In more detail, if the hovering input is detected, the controller 160 determines the hovering input region. Here, the hovering input region may be a region based on a specific point of location in which the hovering is detected, or an area of a finger, for example, a region where variation in capacitance is recognized. The controller 160 determines the number of objects output on a screen in the determined hovering input region. When the number of objects output in the hovering input region exceeds a threshold n (e.g., n>2), the controller 160 determines whether the preset time elapses.

If the preset time elapses in a state in which the number of objects exceeds the number n, the controller 160 may magnify and display the information corresponding to the hovering input region while the hovering input is maintained at operation 645. For example, the controller 160 may output a magnifying window having a certain size on a screen while the hovering is maintained. Here, the magnifying window may be set with various sizes, and an output location of the magnifying window may also be changed. The magnifying window supports a function of magnifying and outputting the display information corresponding to the hovering input region. The display information output from the magnifying window is identical with the display information output from the hovering input region. The user may exactly recognize the highlighted object by the hovering input through the magnifying window.

The controller 160 determines whether the touch input means approaches within the second spacing distance in a state in which the object is selected at operation 650. When the touch input means approaches within the second spacing distance, the controller 160 maintains the selection of the object at operation 655. That is, the controller 160 recognizes that the user input is the hovering operation input, and maintains the hovering input signal. For example, in case of the object operation input state, the user device according to the present disclosure supports a function of disregarding the hovering input detected from other regions.

The controller 160 detects the touch input of the touch input means at operation 670. The controller 160 determines whether the touch contact input is detected within the region based on the hovering input location at operation 680. If a condition in which the touch contact input is detected in the region is satisfied, the controller 160 operates the object selected by the hovering input at operation 690. When the detected touch contact input is detected outside the region, the controller 160 selects the object corresponding to the touch contact input at operation 685.

Meanwhile, although not shown, after the hovering input is detected, when the touch input means is beyond the second spacing distance, and the hovering input is changed within the second spacing distance, the user device may select the object corresponding to the changed location. In addition, when the touch input means is beyond the first spacing distance, the controller 160 may support a function of releasing the display of the object selected by the hovering input.

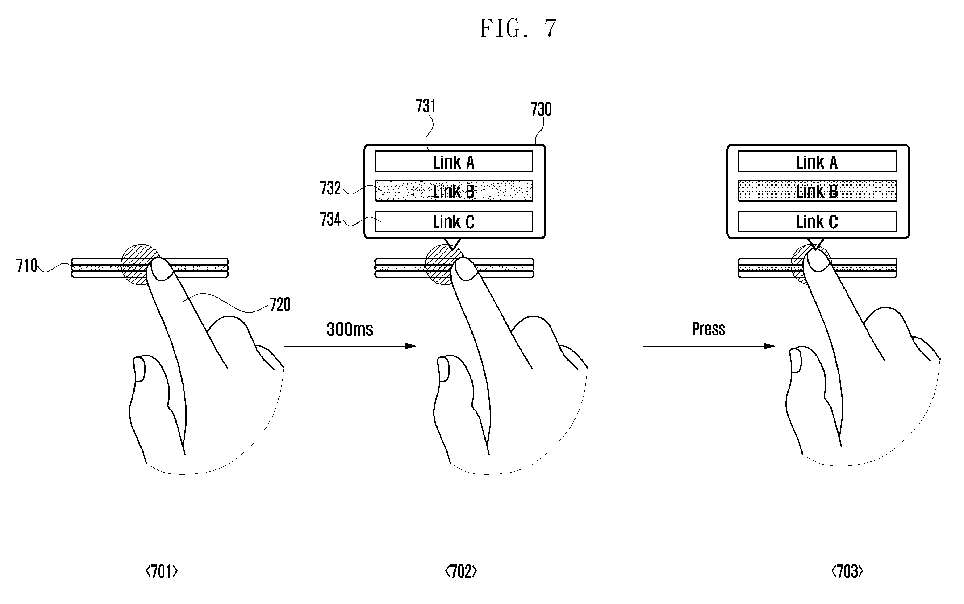

FIG. 7 is a diagram illustrating an object operating function according to an embodiment of the present disclosure.

Referring to FIG. 7, the user may output a screen where an interval between objects is narrowly arranged on the display unit according to a request of a specific user function. For example, the user device may display a screen where an interval between objects output on a screen such as an Internet web execution screen, an e-mail execution screen, a document edit screen, and the like is narrowly arranged.

As illustrated in screen 701, the user's finger 720 may approach a screen in a state in which a plurality of objects 710 are arranged. The user device detects approach of the finger 720 to detect a hovering input. When the hovering input is detected, the user device determines the hovering input region. When it is determined that there are three objects 731, 732, 734 displayed on the hovering input region and a preset time elapses, as illustrated in screen 702, the user device outputs a magnifying window 730 to magnifying and displaying information displayed on the hovering input region to a screen. The magnifying window 730 supports a function that magnifies the display information of a screen output in the hovering input region with a certain size. The user may recognize the object selected by the hovering input through the magnifier window.

In such state, the user may touch and contact the screen in order to operate the selected object. The controller 160 detects the touch contact input, and may change the highlighted color in order to indicate that the object selected by the hovering input is exactly touched. As illustrated in screen 703, the user may recognize that the object to be operated is exactly selected through the object having the changed color.

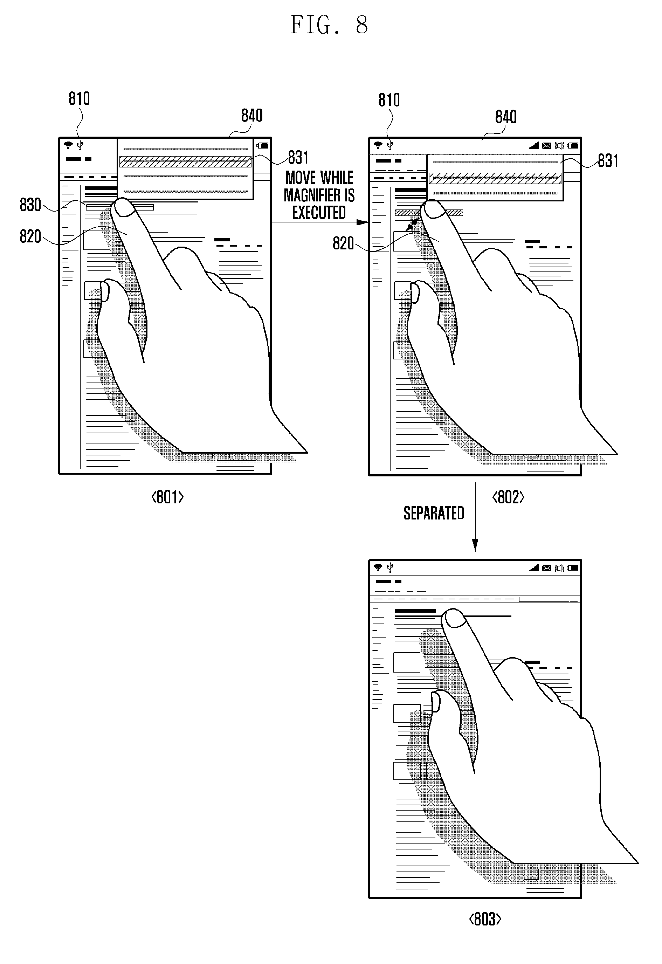

FIG. 8 is a diagram illustrating a screen of operating an object according to an input state of a user according to an embodiment of the present disclosure.

Referring to FIG. 8, since screen 801 is substantially identical with a screen illustrated in FIG. 6, a description thereof is omitted. As shown in screen 801, in the user device, a hovering input region is determined on a screen 810 at the time of detecting the hovering input, for example by detecting the hovering of a user's finger 820. When the number of objects 830 included in the hovering input region exceeds a threshold and the hovering input is maintained for a certain time, the user device magnifies and displays the information of the hovering input region including a selected object 831, which is displayed as highlighted. That is, the user device outputs a magnifying window 840 on the screen 810 as illustrated in a screen 801.

If movement of the hovering input is detected, such as by movement of the user's finger 820 the user device may change the hovering input region determined according to the movement of the hovering input. If the number of objects included in the changed hovering region exceeds a threshold and the hovering input is maintained for a certain time, as illustrated in screen 802, the user device may change a location of the magnifying window 840 output according to the movement of the hovering input.

When the finger is beyond the first spacing distance, the user device may release the display of magnifier window output on the screen as illustrated in screen 803.

According to the method and apparatus of operating an object in a user device of the present disclosure, after an object displayed on the screen is selected according to hovering, a visual effect for the selection is provided such that the user may recognize information related to the object. Further, according to the present disclosure, when inputting an operating of the object selected according to the hovering input, an inconvenience due to an erroneous touch operation may be minimized by disregarding a condition capable of causing an erroneous operation. For example, according to the present disclosure, contents configured with objects of various sizes as in a web page for example, accuracy of a user input can be improved.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of operating an object in a user device, the method comprising:
displaying one or more objects on a screen;
detecting a hovering input selecting one of the one or more objects;
displaying the selected object distinguished from other objects in response to the hovering input;
detecting a touch contact input related to the object selected by the hovering input; and
operating the object selected by the hovering input when the touch contact input satisfies a condition.

2. The method of claim 1, further comprising operating the object selected in response to the touch contact input when the touch contact input does not satisfy the condition.

3. The method of claim 1, wherein the detecting of the hovering input comprises:
detecting a variation in capacitance or electromagnetic induction of the screen;
determining a distance between the screen and a touch input means by measuring the detected variation; and
detecting the hovering input when the determined distance is within a first spacing distance.

4. The method of claim 1, wherein the displaying of the selected object comprises:
changing and displaying at least one of color, light and shade, effect, and brightness of the object corresponding to a location of the hovering input.

5. The method of claim 1, wherein the condition is a case in which the touch contact input is detected within a region based on a location in which the hovering input is detected.

6. The method of claim 1, wherein the condition is a condition in which the touch contact input is within a second spacing distance relatively shorter than the first spacing distance and a condition in which the touch contact input is detected within a region based on a location in which the hovering input is detected.

7. The method of claim 1, wherein the operating of the object comprises executing a function set in response to the object selected by the hovering input.

8. The method of claim 1, further comprising, after the displaying of the selected object:
determining a hovering input region based on a location of the detected hovering input;
determining the number of objects output on a screen in the determined hovering input region;
determining whether the hovering input is maintained for a threshold time when the number of the objects exceeds a threshold number; and
magnifying and displaying information of the hovering input region, when the hovering input is maintained for the threshold time.

9. The method of claim 8, wherein the magnifying and displaying of the information of the hovering input region comprises outputting a magnifying window to magnify information displayed on the hovering input region with a certain size.

10. A user device comprising:
a touch screen configured to detect a user input related to a hovering input and a touch contact input, and to display an execution screen according to the user input; and
a controller configured to display one or more objects on the touch screen, detect the hovering input approaching one of the one or more objects, to display the object selected in response to the hovering input distinguished from other objects, to detect the touch contact input related to the object selected by the hovering input, and to control to operate the object selected by the hovering input when the touch contact input satisfies a condition.

11. The user device of claim 10, wherein the touch screen comprises a touch panel and a display unit configured to detect the hovering input and the touch contact input, and
the display unit displays the object selected by the hovering input distinguished from the object selected by the touch contact input.

12. The user device of claim 10, wherein the controller controls to operate the object selected by the touch contact input when the touch contact input does not satisfy the condition.

13. The user device of claim 10, wherein the condition is a condition in which the touch contact input is detected within a region based on a location in which the hovering input is detected.

14. The user device of claim 10, wherein the condition is a condition in which the touch contact input is within a second spacing distance relatively shorter than the first spacing distance and a condition in which the touch contact input is detected within a region based on a location in which the hovering input is detected.

15. The user device of claim 10, wherein the controller controls to determine a hovering input region based on a location of the detected hovering input, determine the number of objects output on a screen in the determined hovering input region, determine whether the hovering input is maintained for a threshold time when the number of the objects exceeds a threshold number, and magnify and display a display information of the hovering input region when the hovering input is maintained for the threshold time.
